# EUROPEAN PATENT SPECIFICATION

(11) **EP 3 925 856 B1**
(45) Date of publication and mention of the grant of the patent: **21.12.2022**
(21) Application number: 21305839.9
(22) Date of filing: 18.06.2021
(51) Int. Cl.: B62D 1/06

(54) **IMPROVED STEERING WHEEL FOR A VEHICLE**
VERBESSERTES LENKRAD FÜR EIN FAHRZEUG
VOLANT AMÉLIORÉ POUR UN VÉHICULE

(30) Priority: 18.06.2020 IT 202000014659
(43) Date of publication of application: 22.12.2021
(73) Proprietor: IVECO FRANCE S.A.S., 69200 Vénissieux (FR)
(72) Inventor: CODRON, Stephane, 69008 LYON (FR)
(74) Representative: Faraldi, Marco

(56) References cited:
- EP-A1- 1 493 647
- US-A- 4 640 340
- US-A- 5 138 851

## Description

### TECHNICAL FIELD

The present invention relates to a steering wheel for a vehicle, in particular a steering wheel for a heavy vehicle such as a public passenger transport vehicle.

### STATE OF THE PRIOR ART

The steering wheel controls the direction of the vehicle and is held in the driver's hands at all times. The steering wheel is normally placed opposite the dashboard for the above-mentioned driving reasons.

However, this position exposes the steering wheel to the sun's rays passing through the windscreen. This radiation can significantly increase the temperature of the dashboard and steering wheel, making it difficult for the driver to operate the vehicle, even when wearing gloves.

A possible solution to this problem could be to use air conditioning to cool the steering wheel. However, air conditioning could not completely solve the problem because the flow of cooled air would never be sufficient to cool the steering wheel in an efficient way. In addition, continuous use of the air conditioning could cause discomfort to the driver and passengers.

Indeed, steering wheel heating systems for use in winter conditions are known, but adequate steering wheel cooling systems are not known. However, it is clear that adding additional air conditioning systems to the steering wheel would make the steering wheel extremely cumbersome and therefore worsen its usability for the driver.

Known steering wheels are disclosed in EP1493647 A1, US5138851 A or US4640340 A. In particular, EP1493647 A1 discloses the combination of features of the preamble of claim 1.

Therefore, a steering wheel capable of maintaining its temperature within a predetermined range is required to increase the driver's comfort while driving the vehicle.

This invention aims to resolve the above-mentioned drawbacks in an economical and optimised way.

### SUMMARY OF THE INVENTION

The above objectives are achieved by a steering wheel and a vehicle as claimed in the attached independent claims.

Preferred embodiments of the invention are made according to the dependent claims or related to the independent claims mentioned above.

### BRIEF DESCRIPTION OF THE DRAWINGS

Other characteristics and benefits of the invention will become apparent from the following non-limiting description, provided for illustrative purposes, with reference to the attached drawings wherein:
- Figure 1 is a perspective view of the interior of a vehicle comprising a steering wheel according to the invention; and
- Figure 2 is a longitudinal section view of a steering wheel according to the invention; and
- Figure 3 is an enlarged section view of a portion of the steering wheel of Figure 2.

### DETAILED DESCRIPTION OF THE INVENTION

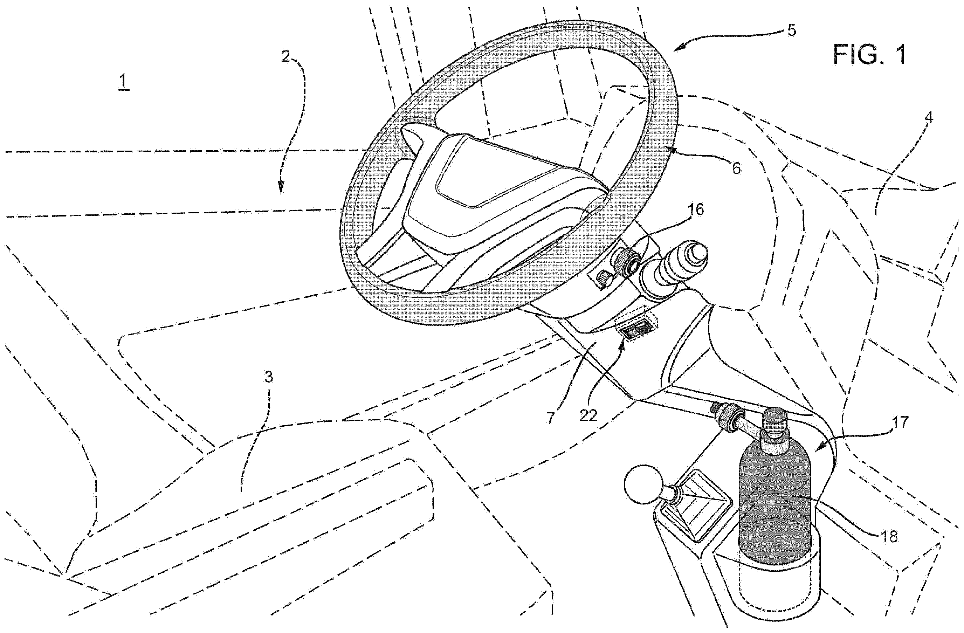

Figure 1 shows the interior of a vehicle 1, for example a public passenger transport vehicle such as a bus or coach, in particular a driver's cab 2.

The driver's cab 2 comprises a seat 3 placed in front of a dashboard 4 equipped with various functional elements suitable to permit control of the driving of the vehicle, including a steering system 5.

The aforesaid steering system 5 essentially comprises a steering wheel 6 movably borne by a column 7 borne by the vehicle. In the embodiment illustrated, by way only of example, the steering wheel 6 is rotatably borne about a steering axis A by the column 7 and the latter is rigidly borne by the dashboard 4.

However, it is clear that other movements of the steering wheel 6 and/or the column 7, are not described here for the sake of brevity and because they are not relevant to the present invention.

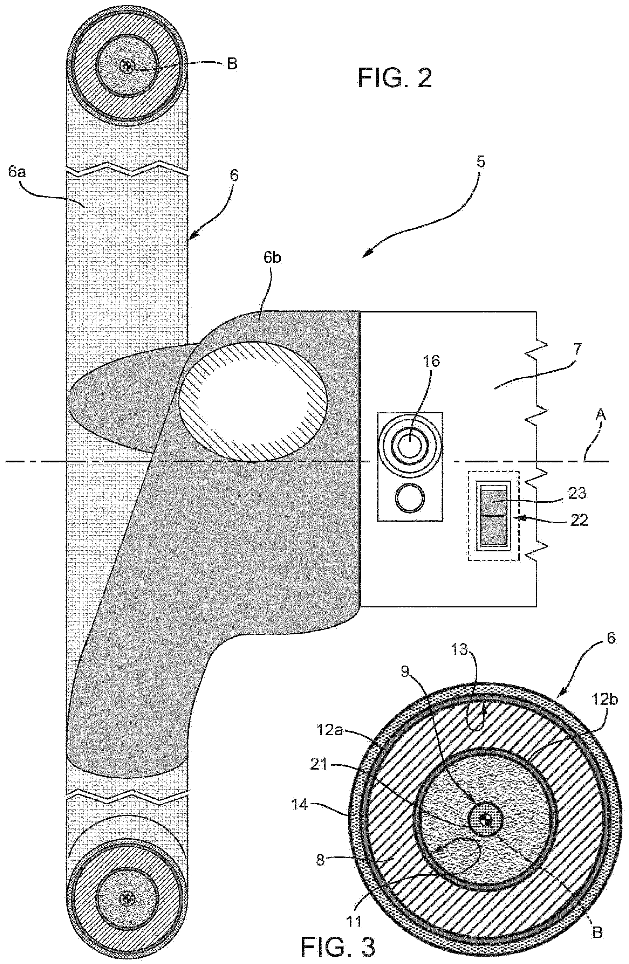

In particular, the steering wheel 6 comprises a grip portion 6a borne by a hub 6b which is borne freely rotatable about the axis A by the column 7. As better illustrated in Figures 2 and 3, the grip portion 6a defines a closed circular shape of circular cross-section.

According to the invention, the steering wheel 6 comprises a core 8 made of eutectic material configured to melt at a comfortable ambient temperature to maintain the steering wheel 6 at that comfortable ambient temperature throughout the transition of that eutectic material from solid to liquid or vice versa. The steering wheel 6 also comprises temperature control means configured to allow the transition of said eutectic material from solid to liquid depending on the commands of the vehicle driver as described below.

Beneficially, this comfortable ambient temperature is between 15°C and 25°C, beneficially 20°C. The eutectic material may be made of any substance suitable for use on a vehicle.

In particular, in a solar radiation condition wherein the steering wheel 6 is at high temperature, the driver can activate the solidification of said core 8 into eutectic material so that by absorbing heat from its exterior to return to the liquid state, it maintains the steering wheel 6 at the eutectic melting temperature for the entire period during which said core 8 is melting.

On the other hand, when the steering wheel is at a low temperature, the driver can liquefy said core 8 into a eutectic material so that by releasing heat to its exterior to return to the solid state, it maintains the steering wheel 6 at the eutectic solidification temperature for the entire period during which said core 8 is solidifying.

Beneficially, the means for controlling the temperature of the steering wheel 6 comprise heating means 9 suitable to heat the core 8 so as to allow its melting.

Beneficially, the means for controlling the temperature of the steering wheel 6 comprise a fluid cooling system. In particular, this system comprises a space 11 through which a pressurized gas can flow, and which is situated adjacent to the core 8, so that this pressurized gas, expanding into said space, cools and thus allows the core 8 to solidify.

According to the described embodiment, the steering wheel 6 comprises a support structure 12 configured to resist the driver's gripping force and to transmit the steering torque about the axis A. This support structure 12 beneficially comprises a first and a second wall 12a, 12b defining between them a closed space 13 in which the core 8 made of eutectic material is housed.

Beneficially, said first and second walls 12a, 12b are an outer annular wall 12a and an inner annular wall 12b and thus the space 13 is an annular space radially delimited by the walls 12a, 12b. Of course, these walls 12a, 12b are rigidly connected to each other and rigidly connected to the hub 6b, although for simplicity this is not illustrated.

The outer wall 12a defines a support for a contact layer 14 made of an ergonomic material by which the driver may grip it, for example a leather or rubber layer.

The inner wall 12b radially delimits on one side the space 13 housing the core 8 and on the other side the closed space 11. Therefore, according to the described embodiment, this space 11 is toroidal in shape.

Beneficially, the walls 12a, 12b, the contact layer 14, and the space 11 are coaxial with each other about a common axis B.

The space 11 is configured to communicate with the environment and with a pressurized fluid tank 17, for example via valve means.

Preferably, these valve means comprise a valve 16 situated on the hub 6b, however it is clear that it could be situated on the grip portion 6a or on any other part of the dashboard 4 or of the vehicle and fluidly connected to the closed space 11.

In particular, this valve 16 allows injection of a fluid, such as compressed gas, configured to expand within the space 11 by absorbing heat from the outside. The valve 16 is also configured to allow this compressed gas to exit into the environment, once injected into the space 11.

According to the illustrated embodiment, the pressurized fluid tank 17 comprises a bottle 18 detachable from the dashboard 4 and configured to allow the driver to inject fluid into the space 15 via the valve 16. This bottle 18 can beneficially be refilled by the driver, if necessary.

According to the invention, the heating means 9 are housed within the space 11 and preferably comprise an electrical resistor 21, more preferably an electrical filament, configured to transform electrical energy into thermal energy, for example by the Joule effect. More preferably, this filament is supported coaxially with the aforementioned axis B.

The heating means 19 may be activated according to a specific control 22, for example a button 23 borne by the vehicle 1, for example by the column 7, as illustrated, or by the dashboard 4, or even by an app installed on the driver's smartphone.

The operation of the steering wheel 6 according to the invention as described above is as follows.

In a condition in which the temperature of the steering wheel is too high / unpleasant due to solar radiation, the driver can inject gas via the valve 16 into the space 11; in the case described, the driver can inject it using the bottle 18. The desired amount or a pre-set amount of the gas can be injected by using a calibrated valve 16. The valve 16 is also calibrated to slowly release gas to the outside. In the space 11, the gas, which is cold because of its expansion, cools the core 8, which solidifies. Once solidified, the core 8 tends to absorb heat from the outside, keeping the steering wheel 6 at the eutectic melting temperature until complete liquefaction, at which point it can begin to heat further. However, this phase transformation lasts for a long time and therefore could be sufficient for the vehicle's journey. However, if the effect completes prematurely, it is possible to again perform a solidification operation, bringing the steering wheel back to the comfortable temperature.

In a condition wherein the steering wheel temperature is too low / uncomfortable due to cold temperatures, the driver can activate the heating means 9. In the described case, the driver can activate the electrical resistance 21 by using the button 23; this electrical resistance 21, by heating the space 11, liquefies the core 8. Once liquid, the core 8 tends to supply heat to its exterior, keeping the steering wheel 6 at the eutectic melting temperature until complete solidification, at which point it can begin to cool further. However, this phase transformation lasts for a long time and therefore could be sufficient for the vehicle's journey. However, if the effect completes prematurely, it is possible to again perform a liquefaction operation, bringing the steering wheel back to the comfortable temperature.

From the foregoing, the benefits of a steering wheel 6 according to the present invention are apparent.

With the steering wheel 6 comprising a core 8 of eutectic material, it is possible to "condition" the temperature of the grip portion 6a of the steering wheel 6 in an effective, compact and economical manner to either cool or warm it relative to the ambient temperature.

In particular, the use of a core 8 made of eutectic material does not require substantial revisions or special maintenance because it is insulated from the outside and simply exchanges heat via the structural part 12 with the environment.

Thanks to the temperature control means, it is possible to activate heating or cooling of the steering wheel 6 manually or automatically, according to the driver's needs, in an economical way.

Furthermore, the use of the described temperature control means makes it possible to achieve a compact steering wheel 6, substantially without varying its standard dimensions and thus without changing its usability.

In addition, the compressed gas that can be injected into the space 11 is harmless to the driver and passengers and can therefore be safely used.

Finally, it is apparent that the steering wheel according to the present invention may be subject to modifications and variations without thereby departing from the protective scope of the claims.

It is clear that the shape of the grip portion 6a and the positioning of the steering system 5 are arbitrary and can be changed depending on the type and size of the vehicle.

Again, it is clear that there may be different valve means 16. In addition, the pressurizing means 17 can be integrated into the dashboard 4 or column 7 and activated automatically.

Of course, different geometries of the core 8 can be provided as well as different types of compressed gases to be injected into the steering wheel, different types of heating means 9 or different types of eutectic material used in the core 8.

## Claims

1. A steering wheel (6) for a vehicle comprising a grip portion (6a) connected to a hub (6b) borne freely rotatable relative to a support (7) borne by a vehicle,
**characterized in that** said grip portion (6a) comprises a core (8) made of eutectic material having a eutectic melting temperature at a comfortable ambient temperature, said steering wheel (6) comprising temperature control means configured to vary the physical state of said core (8) to allow its melting or solidification in order to maintain said grip portion (6a) at said eutectic melting temperature.

2. The steering wheel according to claim 1, wherein said comfortable ambient temperature is between 15°C and 25°C.

3. The steering wheel according to one of claims 1 or 2, wherein said grip portion (6a) comprises a support structure (12) configured to define a closed space (13) configured to accommodate said core (8).

4. The steering wheel according to one of the preceding claims, wherein said temperature control means comprise heating means (9) configured to supply heat to said core (8) and a fluid system configured to absorb heat from said core (8).

5. The steering wheel according to claim 3 and 4, wherein said structure comprises an outer wall (12a) and an inner wall (12b) which define between them said closed space (13) housing said core (8), said outer wall (12a) being configured to define a support for a contact layer (14) and said internal wall (12b) further delimiting a space (11) configured to accommodate said fluid system.

6. The steering wheel according to claim 5, wherein said heating means (9) are housed in said space (11).

7. The steering wheel according to one of claims 5 or 6, comprising valve means (16) configured to allow fluid communication of said space (11) with the environment or a tank (17) of pressurized fluid.

8. The steering wheel according to one of claims 4 to 7, comprising activation means (22) for controlling said heating means (9).

9. The steering wheel according to one of claims 5 to 8, wherein said walls (12a, 12b), said layer (14) and said space (11) are all coaxial with an axis (B).

10. A vehicle comprising a steering wheel (6) according to one of the preceding claims.

11. The vehicle according to claim 10, wherein said tank (17) is integrated into said vehicle.

12. The vehicle according to claim 10, wherein said tank (17) comprises a bottle (18) selectively detachable from a portion (4) of said vehicle.

## Patentansprüche

1. Lenkrad (6) für ein Fahrzeug, umfassend einen Griffabschnitt (6a), der mit einer Nabe (6b) verbunden ist, die relativ zu einem von einem Fahrzeug getragenen Träger (7) frei drehbar gelagert ist, **dadurch gekennzeichnet, dass** der Griffabschnitt (6a) einen Kern (8) umfasst, der aus einem eutektischen Material mit einer eutektischen Schmelztemperatur bei einer angenehmen Umgebungstemperatur ausgeführt ist, und das Lenkrad (6) Mittel zur Temperatursteuerung umfasst, die so ausgeführt sind, dass sie den physikalischen Zustand des Kerns (8) variieren, um sein Schmelzen oder Erstarren zu ermöglichen, um den Griffbereich (6a) auf der eutektischen Schmelztemperatur zu halten.

2. Lenkrad nach Anspruch 1, wobei die angenehme Umgebungstemperatur zwischen 15°C und 25°C liegt.

3. Lenkrad nach einem der Ansprüche 1 oder 2, wobei der Griffabschnitt (6a) eine Stützstruktur (12) umfasst, die so ausgeführt ist, dass sie einen geschlossenen Raum (13) definiert, der ausgeführt ist, um den Kern (8) aufzunehmen.

4. Lenkrad nach einem der vorhergehenden Ansprüche, wobei die Temperatursteuerungsmittel Heizmittel (9) umfassen, die so ausgeführt sind, dass sie dem Kern (8) Wärme zuführen, und wobei die Temperatursteuerungsmittel ein Fluidsystem umfassen, das so ausgeführt ist, dass es Wärme von dem Kern (8) absorbiert.

5. Lenkrad nach Anspruch 3 und 4, wobei die Stützstruktur (12) eine Außenwand (12a) und eine Innenwand (12b) umfasst, die zwischen sich den geschlossenen Raum (13) begrenzen, in dem der Kern (8) untergebracht ist, wobei die Außenwand (12a) so ausgeführt ist, dass sie einen Träger für eine Kontaktschicht (14) definiert, und die Innenwand (12b) ferner einen Raum (11) begrenzt, der so ausgeführt ist, dass er das Fluidsystem aufnimmt.

6. Lenkrad nach Anspruch 5, wobei die Heizmittel (9) in dem Raum (11) angeordnet sind.

7. Lenkrad nach einem der Ansprüche 5 oder 6, umfassend Ventilmittel (16), die so ausgeführt sind, dass sie eine Fluidverbindung des Raums (11) mit der Umgebung oder einem Tank (17) für unter Druck stehendes Fluid ermöglichen.

8. Lenkrad nach einem der Ansprüche 4 bis 7, umfassend Aktivierungsmittel (22) zur Steuerung der Heizmittel (9).

9. Lenkrad nach einem der Ansprüche 5 bis 8, wobei die Wände (12a, 12b), die Schicht (14) und der Raum (11) alle koaxial zu einer Achse (B) sind.

10. Fahrzeug umfassend ein Lenkrad (6) nach einem der vorhergehenden Ansprüche.

11. Fahrzeug nach Anspruch 10, wobei der Tank (17) in das Fahrzeug integriert ist.

12. Fahrzeug nach Anspruch 10, wobei der Tank (17) eine Flasche (18) umfasst, die wahlweise von einem Abschnitt (4) des Fahrzeugs abnehmbar ist.

## Revendications

1. Volant de direction (6) pour un véhicule comprenant une portion de préhension (6a) reliée à un moyeu (6b) porté librement rotatif par rapport à un support (7) porté par un véhicule,
**caractérisé en ce que** ladite portion de préhension (6a) comprend une partie centrale (8) faite d'un matériau eutectique ayant une température de fusion eutectique à une température ambiante agréable, ledit volant de direction (6) comprenant des moyens de régulation de température configurés pour faire varier l'état physique de ladite partie centrale (8) pour permettre sa fusion ou sa solidification afin de maintenir ladite portion de préhension (6a) à ladite température de fusion eutectique.

2. Volant de direction selon la revendication 1, dans lequel ladite température ambiante agréable est entre 15 °C et 25 °C.

3. Volant de direction selon l'une des revendications 1 ou 2, dans lequel ladite portion de préhension (6a) comprend une structure de support (12) configurée pour définir un espace fermé (13) configuré pour recevoir ladite partie centrale (8).

4. Volant de direction selon l'une des revendications précédentes, dans lequel lesdits moyens de régulation de température comprennent des moyens de chauffage (9) configurés pour fournir de la chaleur à ladite partie centrale (8) et un système de fluide configuré pour absorber de la chaleur à partir de ladite partie centrale (8).

5. Volant de direction selon les revendications 3 et 4, dans lequel ladite structure comprend une paroi (12a) extérieure et une paroi (12b) intérieure qui définissent entre elles ledit espace fermé (13) contenant ladite partie centrale (8), ladite paroi (12a) extérieure étant configurée pour définir un support pour une couche de contact (14) et ladite paroi (12b) interne délimitant en outre un espace (11) configuré pour recevoir ledit système de fluide.

6. Volant de direction selon la revendication 5, dans lequel lesdits moyens de chauffage (9) sont contenus dans ledit espace (11).

7. Volant de direction selon l'une des revendications 5 ou 6, comprenant des moyens vannes (16) configurés pour permettre une communication de fluide dudit espace (11) avec l'environnement ou un réservoir (17) de fluide sous pression.

8. Volant de direction selon l'une des revendications 4 à 7, comprenant des moyens d'actionnement (22) pour commander lesdits moyens de chauffage (9).

9. Volant de direction selon l'une des revendications 5 à 8, dans lequel lesdites parois (12a, 12b), ladite couche (14) et ledit espace (11) sont tous coaxiaux avec un axe (B).

10. Véhicule comprenant un volant de direction (6) selon l'une des revendications précédentes.

11. Véhicule selon la revendication 10, dans lequel ledit réservoir (17) est intégré dans ledit véhicule.

12. Véhicule selon la revendication 10, dans lequel ledit réservoir (17) comprend une bouteille (18) détachable de manière sélective d'une portion (4) dudit véhicule.
